# EUROPEAN PATENT APPLICATION

(11) **EP 4 105 087 A1**
(43) Date of publication of application: **21.12.2022**
(21) Application number: 20919302.8
(22) Date of filing: 10.02.2020
(51) Int. Cl.: B60R 99/00

(54) **PARKING ASSIST METHOD AND PARKING ASSIST APPARATUS**

(71) Applicant: NISSAN MOTOR CO., LTD., Yokohama-shi, Kanagawa 221-0023 (JP)
(72) Inventor: SUZUKI, Yasuhiro, Atsugi-shi, Kanagawa 243-0123 (JP)
(74) Representative: Grünecker Patent- und Rechtsanwälte PartG mbB
(86) International application number: PCT/JP2020/005116
(87) International publication number: WO 2021/161378

(57) **Abstract**

A parking assist method and a parking assist apparatus (1) are provided, in which the time required for parking can be shortened in the case of assisting in parking a vehicle along a route requiring cutting of the wheel. The present invention includes detecting a parking space (PS) for parking a subject vehicle (VI), setting a position of turning the steering wheel (P) the steering wheel of the subject vehicle (VI) being turned at the position of turning the steering wheel (P), generating a parking route for reaching from a current position of the subject vehicle (VI) to the parking space (PS) via the position of turning the steering wheel (P), and controlling the subject vehicle (VI) so as to autonomously travel along the parking route. When generating the parking route, the present invention further includes determining a turning direction to which the subject vehicle (VI) turns in a route for traveling from the position of turning the steering wheel (P) to the parking space (PS), and generating a route from the current position of the subject vehicle (VI) to the position of turning the steering wheel (P) such that the steering direction of the subject vehicle (VI) corresponds to the turning direction at the time when the subject vehicle (VI) is stopped at the position of turning the steering wheel (P).

## Description

### [Technical Field]

The present invention relates to a parking assist method and a parking assist apparatus.

### [Background Art]

There is a conventionally known parking assist method (Patent Document 1) including, when assisting a tandem parking of a vehicle, determining whether or not the parking space length at the frontage for the vehicle is equal to or greater than the sum of the entire length of the vehicle and a predetermined length, assisting in the parking of the vehicle with a clothoid curve route including no static steering if the parking space length is equal to or greater than the sum of the entire length of the vehicle and the predetermined length, and assisting in the parking of the vehicle with a route including the static steering when the parking space length is less than the sum of the entire length of the vehicle and the predetermined length.

### [Prior Art Document]

### [Patent Document]

[Patent Document 1] Japanese Patent No. 6062406

### [Summary of Invention]

### [Problems to be solved by Invention]

In the above prior art, when assisting in vehicle parking with a route requiring an operation of turning the steering wheel (or cutting the wheel), the steering direction of a subject vehicle is reversed after the operation of turning the steering wheel, which raises a problem that the time required for the parking becomes longer.

A problem to be solved by the present invention is to provide a parking assist method and a parking assist apparatus, in which the required parking time can be shortened when assisting in parking a vehicle with a route requiring an operation of turning the steering wheel.

### [Means for solving problems]

In the present invention, the above problem is solved by determining a turning direction to which a subject vehicle turns in a route for traveling from a position of turning a steering wheel to a parking space, and generating a route from the current position of the subject vehicle to the position of turning the steering wheel such that the steering direction of the subject vehicle corresponds to the turning direction at the time when the subject vehicle is stopped at the position of turning the steering wheel.

### [Effect of Invention]

The present invention can shorten the parking time required in the case of assisting in parking a vehicle with a route requiring the operation of turning the steering wheel.

### [Brief Description of Drawing]

FIG. 1 is a block diagram illustrating an exemplary configuration of a parking assist system of an embodiment according to the present invention.
FIG. 2 is a perspective view of a vehicle illustrating an exemplary arrangement of imaging devices of the present embodiment mounted on a subject vehicle.
FIG. 3 is an exemplary image displayed on a display, which is an bird's-eye image generated by an image processing device of the present embodiment.
FIG. 4 is a plan view of a vehicle illustrating an exemplary arrangement of ranging devices of the present embodiment mounted on the subject vehicle.
FIG. 5 is a plan view illustrating exemplary patterns of lines defining parking areas of the present embodiment.
FIG. 6 is a plan view illustrating a parking route according to a comparative example of the present invention.
FIG. 7 is a plan view illustrating an exemplary parking route (practical example) calculated by a parking assist apparatus of the present embodiment.
FIG. 8 is a plan view illustrating another exemplary parking route (practical example) calculated by the parking assist apparatus of the present embodiment.
FIG. 9A is a plan view (Part 1) illustrating still another exemplary parking route (practical example) calculated by the parking assist apparatus of the present embodiment.
FIG. 9B is a plan view (Part 2) illustrating still another exemplary parking route (practical example) calculated by the parking assist apparatus of the present embodiment.
FIG. 9C is a plan view (Part 3) illustrating still another exemplary parking route (practical example) calculated by the parking assist apparatus of the present embodiment.
FIG. 9D is a plan view (Part 4) illustrating still another exemplary parking route (practical example) calculated by the parking assist apparatus of the present embodiment.
FIG. 10 is a plan view illustrating yet another exemplary parking route (practical example) calculated by the parking assist apparatus of the present embodiment.
FIG. 11 is a timing diagram illustrating a traveling motion plan for parking assist according to a comparative example of the present invention, in which (A) is a timing diagram of vehicle speed and (B) is a timing diagram of steering angle.
FIG. 12 is a timing diagram illustrating an exemplary traveling motion plan for parking assist by the parking assist apparatus of the present embodiment, in which (A) is a timing diagram of vehicle speed and (B) is a timing diagram of steering angle.
FIG. 13 is a timing diagram illustrating another an exemplary traveling motion plan for parking assist by the parking assist apparatus of the present embodiment, in which (A) is a timing diagram of vehicle speed and (B) is a timing diagram of steering angle.
FIG. 14 is a flowchart illustrating an exemplary control procedure of the parking assist apparatus of the present embodiment illustrated in FIG. 1.
FIG. 15 is a flowchart illustrating an exemplary subroutine of step S6 in the flowchart illustrated in FIG. 14.

### [Mode(s) for Carrying out the Invention]

Hereinafter, an embodiment according to the present invention will be described with reference to attached drawings.

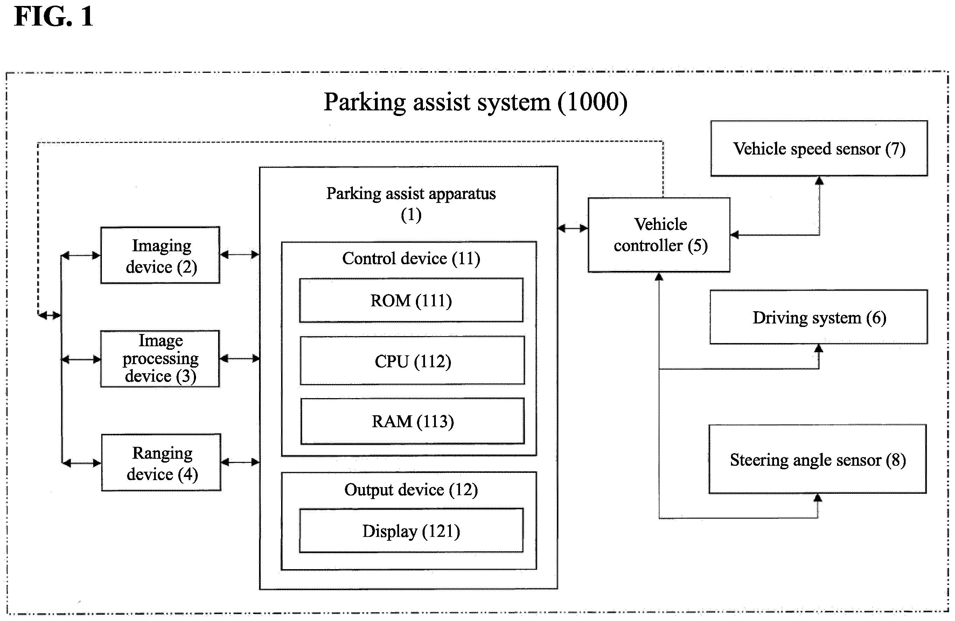

FIG. 1 is a block diagram illustrating a configuration of a parking assist system 1000 according to an embodiment of the present invention. The parking assist system 1000 of the present embodiment is a system for assisting the traveling motion of a subject vehicle moving (parking) from the current position to a parking space. The parking assist system 1000 of the present embodiment includes a parking assist apparatus 1, an imaging device 2, an image processing device 3, a ranging device 4, a vehicle controller 5, a driving system 6, a vehicle speed sensor 7, and a steering angle sensor 8. These constituent components are connected by a controller area network (CAN) or other onboard LAN in order to exchange information with each other.

The parking assist apparatus 1 of the present embodiment includes a control device 11 and an output device 12. The control device 11 of the present embodiment includes a ROM 111 that is a read only memory (ROM) storing parking assist programs, a CPU 112 that is a central processing unit (CPU) executing the programs stored in the ROM 111, and a RAM 113 that is a random access memory (RAM) functioning as an accessible storage device. The output device 12 includes a display 121 that is display equipment for presenting information such as a space in which the subject vehicle can be parked to a driver. The parking assist programs stored in the ROM 111 of the present embodiment are programs that enable the control device 11 to execute a control procedure for detecting a parking space in which the subject vehicle can be parked, presenting the parking space on the display 121, calculating a parking route for parking the subject vehicle in the parking space set by the driver, and assisting the operation for moving the subject vehicle from the current position to the parking space.

The parking assist apparatus 1 of the present embodiment is applicable to automated (or autonomous) parking in which the parking can be realized in an automated or autonomous manner by performing all of steering, accelerator, and brake operations in an automated or autonomous manner, and is also applicable to semi-automated (or semi-autonomous) parking in which the parking can be realized by manually performing at least one of the steering, accelerator, and brake operations and performing the remaining operations in an automated or autonomous manner. Further, the parking assist apparatus 1 of the present embodiment is also applicable to parking assist in which a parking route is presented to a driver such that the driver can operate the steering, accelerator, and brake to park the subject vehicle in a parking space. In the present embodiment, an automatically resettable switch such as a deadman switch is used in the automated (or autonomous) parking and the semi-automated (or semi-autonomous) parking. In the parking assist apparatus 1, the execution of the automated (or autonomous) driving for the subject vehicle is in progress while the deadman switch is in a pressed state, and the automated (or autonomous) driving and the semi-automated (or semi-autonomous) driving for the subject vehicle is stopped upon releasing of pressing on the deadman switch.

Further, the parking assist apparatus 1 of the present embodiment may be configured to work in response to a signal transmitted from a portable terminal device (equipment such as a smartphone, a PDA, or an intelligent key that locks and unlocks vehicle doors) that can exchange information with the parking assist apparatus 1. In this case, the parking assist apparatus 1 of the present embodiment is also applicable to remote parking in which a driver can manipulate and park the subject vehicle from outside the vehicle.

The imaging device 2 of the present embodiment, the image processing device 3 of the present embodiment, and the ranging device 4 of the present embodiment are equipment capable of detecting traveling environment information including the presence of any obstacle positioned around the subject vehicle, in front of, on both sides, behind, or in the entire circumference of the subject vehicle, and other situation around the subject vehicle.

The imaging device 2 of the present embodiment is an onboard device configured to recognize environmental information around the subject vehicle from images. The imaging device 2 of the present embodiment acquires the environmental information around the subject vehicle by imaging the surroundings of the subject vehicle and acquiring image data including any obstacle existing around the subject vehicle. Examples of the imaging device 2 include a camera equipped with image sensor elements such as CCDs, an ultrasonic camera, an infrared camera, and other cameras. The environmental information around the subject vehicle acquired by the imaging device 2 is output to the control device 11.

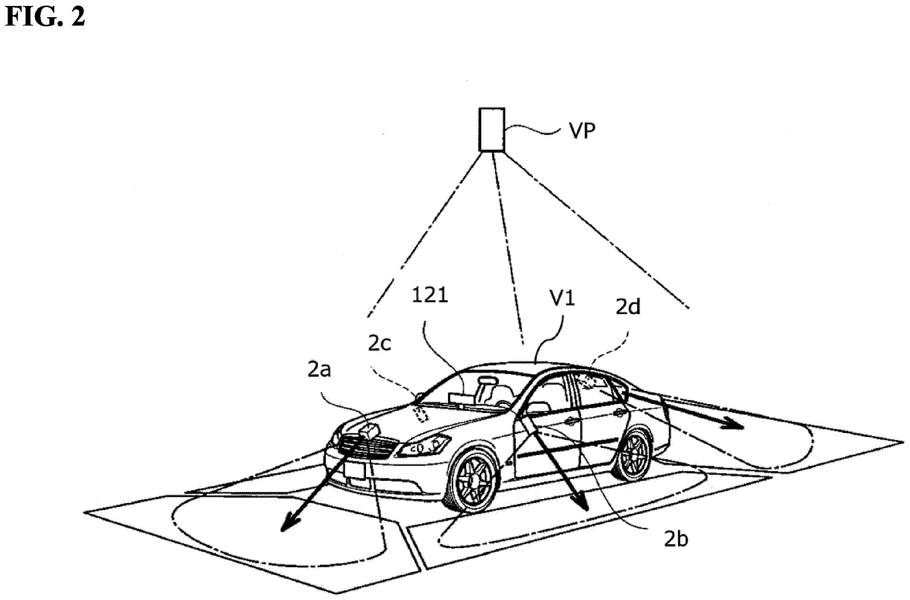

FIG. 2 is a perspective view of a subject vehicle VI illustrating an exemplary arrangement of the imaging device 2 of the present embodiment mounted on the subject vehicle VI. According to the example illustrated in FIG. 2, an imaging device 2a is arranged on a front grill part of the subject vehicle VI, an imaging device 2b is arranged beneath a left door mirror, an imaging device 2c is arranged beneath a right door mirror, and an imaging device 2d is arranged near a rear bumper. Each of the imaging devices 2a to 2d can be a camera including a wide-angle lens having a large viewing angle. As illustrated in FIG. 2, the imaging device 2a captures an image covering from the front right to the front left of the subject vehicle VI, the imaging device 2b captures an image covering from the front left to the rear left of the subject vehicle VI, the imaging device 2c captures an image covering from the front right to the rear right of the subject vehicle VI, and the imaging device 2d captures an image covering from the rear right to the rear left of the subject vehicle VI. Adopting such an arrangement of the imaging device 2 can reduce any blind spot wherein information cannot be acquired in the case of acquiring the environmental information around the subject vehicle VI. A motion stereo technique using the imaging devices 2a to 2d may be usable in the obstacle detection by the imaging device 2.

The image processing device 3 of the present embodiment is a device configured to generate an bird's-eye image indicating the situation around the subject vehicle VI when the subject vehicle VI is viewed from an upper virtual viewpoint. The virtual viewpoint is, for example, a virtual viewpoint VP illustrated in FIG. 2. The image processing device 3 generates an bird's-eye image using a plurality of captured images acquired by using the imaging device 2. Image processing for generating an bird's-eye image in the image processing device 3 is, for example, but is not limited to, the processing method described in SUZUKI Masayasu, CHINOMI Satoshi, and TAKANO Teruhisa, "Development of All-around View System", Society of Automotive Engineers of Japan, Academic Lecture Pre-print Collection, 116-07 (2007-10),17-22. The bird's-eye image (or all-around image) generated by the image processing device 3 is output to the control device 11, and is presented to a driver by the display 121 illustrated in FIG. 2. Although the display 121 illustrated in FIG. 2 is disposed on an upper part of the dashboard between a driver's seat and a passenger seat, the installation position of the display 121 is not particularly limited and the display 121 can be installed at a suitable position.

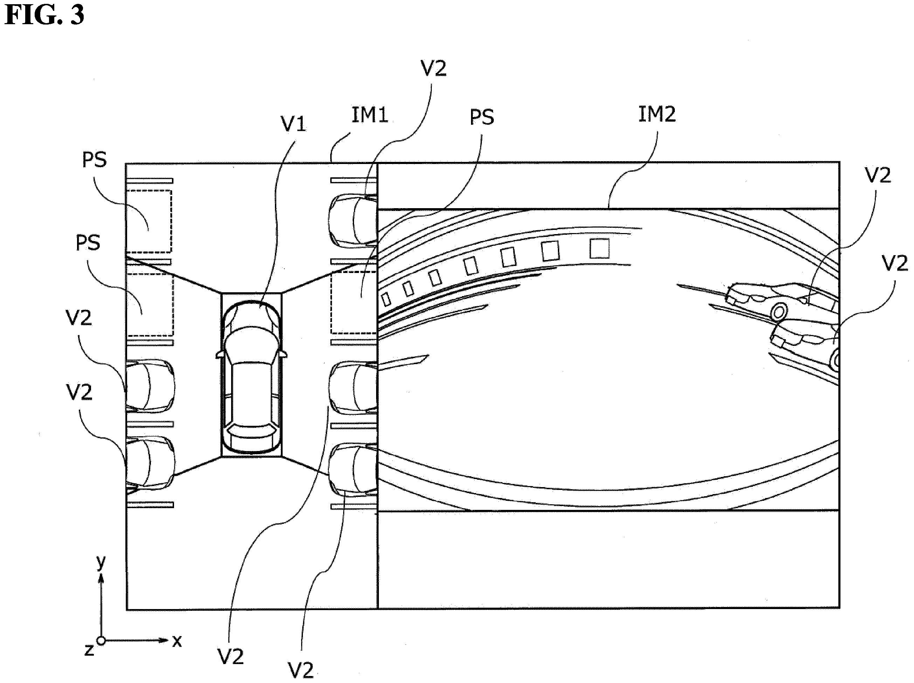

FIG. 3 is an image displayed on the display, which is an exemplary bird's-eye image generated by the image processing device 3 of the present embodiment. The traveling scene of the subject vehicle VI in FIG. 3 is a scene in which the subject vehicle VI is traveling in a parking lot in order to find a parking space PS. The image displayed on the display illustrated in FIG. 3 includes an bird's-eye image IM1 generated by the image processing device 3 of the present embodiment, on the left side, and a monitoring image IM2 for monitoring the surroundings of the subject vehicle VI, on the right side. The subject vehicle VI is displayed at the center of the bird's-eye image IM1, and parking areas sectioned with white lines are displayed on the left and right sides of the subject vehicle VI. These parking areas include an area in which another vehicle V2 is detected and this vehicle V2 is displayed, and an area in which any obstacle such as another vehicle V2 is not detected and the subject vehicle VI can be parked, which is indicated by a dotted line frame indicating the parking space PS as an area in which the subject vehicle V1 can be parked. On the other hand, the monitoring image IM2 is the image acquired from the imaging device 2a arranged on the front grill part of the subject vehicle VI, which is displayed in order to present surrounding environmental information of the front side, that is the current traveling direction of the subject vehicle V1. The monitoring image IM2 includes, for example, the display of an obstacle such as another vehicle V2, in addition to the parking areas sectioned by white lines.

The ranging device 4 of the present embodiment is a device configured to calculate the relative distance and the relative speed between the subject vehicle VI and an object. The ranging device 4 is a radar device or sonar, such as a laser radar, a millimeter wave radar (e.g., LRF), a light detection and ranging (LiDAR) unit, or an ultrasonic wave radar. Based on a signal received from the radar device or sonar, the ranging device 4 detects the presence/position of an object and the distance to this object. The object is, for example, an obstacle, a pedestrian, or any other vehicle around the subject vehicle VI. The information about the object detected by the ranging device 4 is output to the control device 11. During the parking assist, if the subject vehicle VI is likely to collide with the object detected by the ranging device 4, the control device 11 of the present embodiment stops the subject vehicle VI and informs the driver of the likelihood of collision between the detected object and the subject vehicle VI by using the display 121.

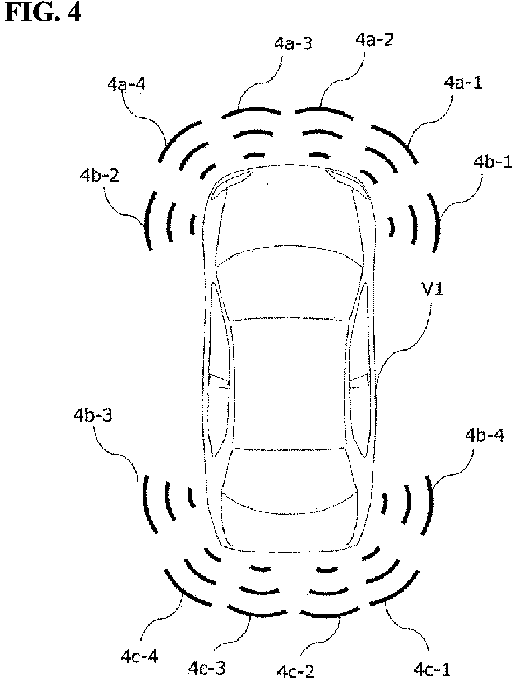

FIG. 4 is a plan view of the subject vehicle VI illustrating an exemplary arrangement of the ranging device 4, in a case where the ranging device 4 of the present embodiment is mounted on the subject vehicle VI. The subject vehicle VI illustrated in FIG. 4 includes front ranging devices 4a configured to detect objects in front of the subject vehicle VI, side ranging devices 4b configured to detect objects on the right and left sides of the subject vehicle VI, and rear ranging devices 4c configured to detect objects behind the subject vehicle V1. The subject vehicle V1 illustrated in FIG. 4 includes ranging devices 4a-1 to 4a-4 as the front ranging devices 4a, ranging devices 4b-1 to 4b-4 as the side ranging devices 4b, and ranging devices 4c-1 to 4c-4 as the rear ranging devices 4c. The ranging device 4 of the present embodiment can be installed, for example, in bumpers of the subject vehicle V1. Arranging the ranging device 4 in this manner can prevent the calculation of the relative distance and the relative speed between the subject vehicle VI and the surrounding object from becoming inaccurate.

The vehicle controller 5 of the present embodiment is an onboard computer such as an electronic control unit (ECU) that electronically controls the driving system 6 controlling the driving of the subject vehicle V1. The vehicle controller 5 controls a driving device, a braking device, and a steering device included in the driving system 6, in order to assist the traveling motion of the subject vehicle VI for moving (parking) from the current position to the parking space PS. The vehicle controller 5 receives, from the parking assist apparatus 1, a control instruction based on a parking route, a target vehicle speed, and a target steering angle calculated in advance. Each of the parking route, the target vehicle speed, and the target steering angle will be described below.

The driving system 6 of the present embodiment includes driving equipment such as an electrically driven motor and/or an internal combustion engine serving as traveling drive sources, a power transmission device including a drive shaft and an automatic transmission for transmitting the output of these traveling drive sources to driving wheels, the driving device that controls the power transmission device, the braking device that brakes the wheels, and the steering device that controls wheels steered according to the steering angle of the steering wheel (so-called handle). The vehicle controller 5 receives, from the parking assist apparatus 1, the control instruction based on the parking route and the target vehicle speed calculated in advance. Then, the vehicle controller 5 generates a control signal to be supplied to the driving equipment of the driving system 6 based on the control instruction from the parking assist apparatus 1, and controls the driving behavior of the vehicle including acceleration/deceleration. The driving system 6 can autonomously control the vehicle speed of the subject vehicle VI by receiving the control signal from the vehicle controller 5.

Further, the driving system 6 of the present embodiment includes the steering device. The steering device includes a steering actuator, and the steering actuator includes a motor or the like attached to a column shaft of the steering. The steering device of the driving system 6 is controlled by the vehicle controller 5 such that the subject vehicle travels while maintaining a predetermined lateral position (position in the left and right direction of the vehicle) with respect to the parking route calculated in advance. The vehicle controller 5 controls the steering device using at least one of the environmental information around the subject vehicle VI acquired by the imaging device 2, the bird's-eye image IM1 generated by the image processing device 3, and the information of an obstacle, a pedestrian, or any other vehicle around the subject vehicle VI detected by the ranging device 4. In this case, the parking assist apparatus 1 transmits, to the vehicle controller 5, the control instruction based on the parking route calculated in advance and the target steering angle. Then, the vehicle controller 5 generates a control signal to be supplied to the steering device of the driving system 6 based on the control instruction from the parking assist apparatus 1, and executes steering control for the subject vehicle VI. The driving system 6 can autonomously control the steering of the subject vehicle VI by receiving the control signal from the vehicle controller 5.

The vehicle speed sensor 7 of the present embodiment is a sensor that is provided in the driving device of the driving system 6 and configured to detect the vehicle speed of the subject vehicle V1. The steering angle sensor 8 of the present embodiment is a sensor that is provided in the steering device of the driving system 6 and configured to detect the steering angle of the subject vehicle V1. The vehicle speed of the subject vehicle VI detected by the vehicle speed sensor 7 and the steering angle of the subject vehicle VI detected by the steering angle sensor 8 are output to the control device 11 via the vehicle controller 5.

The control device 11 of the present embodiment achieves an environmental information acquisition function of acquiring the environmental information around the subject vehicle VI by causing the CPU 112 to execute the parking assist programs stored in the ROM 111, a parking space detection function of detecting a parking area in which the subject vehicle V1 can be parked, a parking space display function of displaying the detected parking space PS as the bird's-eye image IM1 on the display 121, a parking route calculation function of calculating a parking route for enabling the subject vehicle VI to move from the current position to the parking space PS (so as to be parked), and a traveling motion planning function of planning the traveling motion of the subject vehicle VI so as to be parked along the calculated parking route.

The environmental information acquisition function of the control device 11 of the present embodiment is a function that the control device 11 can use to acquire surrounding environmental relevant information including the presence of any obstacle positioned around the subject vehicle VI. The control device 11 uses the environmental information acquisition function to acquire, for example, vehicle speed information about the subject vehicle VI detected by the vehicle speed sensor 7 and steering angle information about the subject vehicle VI detected by the steering angle sensor 8, as the surrounding environmental relevant information. Further, the control device 11 uses the environmental information acquisition function to acquire positional information about the subject vehicle VI, as the surrounding environmental relevant information, which has been detected by a subject vehicle position detection device (not illustrated) equipped with, for example, a GPS unit and a gyro sensor, and from three-dimensional high-precision map information including positional information of various facilities and specific points stored in the ROM. Using the above-mentioned surrounding environmental relevant information, the control device 11 of the present embodiment determines whether or not the traveling scene of the subject vehicle VI is a scene in which the subject vehicle VI is about to be parked in the parking space PS by the environmental information acquisition function.

For example, from the surrounding environmental relevant information, the control device 11 of the present embodiment determines that a situation in which the subject vehicle VI is traveling at a vehicle speed equal to or less than a predetermined vehicle speed for a predetermined time or more is the scene in which the subject vehicle VI is about to be parked in the parking space PS. Alternatively, when it is determined from the surrounding environmental relevant information that the subject vehicle VI is traveling in a parking lot such as a parking area of an automobile road, the control device 11 of the present embodiment determines that this situation is the scene in which the subject vehicle VI is about to be parked in the parking space PS. Alternatively, if the surrounding environmental relevant information is acquired using a communication device (not illustrated) through communication with the outside of the vehicle (so-called road-vehicle communication), or vehicle-to-vehicle communication, the control device 11 of the present embodiment may refer to this in determining the scene in which the subject vehicle VI is about to be parked in the parking space PS. When the scene in which the subject vehicle VI is about to be parked in the parking space PS is determined, the control device 11 of the present embodiment continues the execution of the parking assist programs. To the contrary, for example, when it is determined from the surrounding environmental relevant information that the subject vehicle VI exits the parking lot and is traveling on a road, the control device 11 of the present embodiment determines that this situation is not the scene in which the subject vehicle VI is about to be parked in the parking space PS. Upon determining that it is not the scene in which the subject vehicle V1 is about to be parked in the parking space PS, the control device 11 of the present embodiment stops the execution of the parking assist programs.

In the case of determining the scene in which the subject vehicle VI is about to be parked in the parking space PS, the control device 11 of the present embodiment uses the environmental information acquisition function to acquire images of boundary lines such as white lines around the subject vehicle VI and surrounding objects captured, for example, by the imaging devices 2 attached to a plurality of portions of the subject vehicle VI, as the surrounding environmental relevant information. Further, the control device 11 of the present embodiment uses the environmental information acquisition function to acquire detection results of, for example, the front ranging device 4a, the side ranging device 4b, and the rear ranging device 4c, as the surrounding environmental relevant information. Using the above-mentioned surrounding environmental relevant information, the control device 11 of the present embodiment detects the parking space PS that is a parking area in which the subject vehicle VI can be parked. In detecting the parking space PS, the parking space detection function can be used.

The parking space detection function of the control device 11 of the present embodiment is a function usable to detect the parking area in which the subject vehicle VI can be parked using the environmental information around the subject vehicle VI acquired by the environmental information acquisition function. In the detection of the parking space PS, the control device 11 of the present embodiment uses the parking space detection function to cause the image processing device 3 to create the bird's-eye image IM1 using the captured image acquired by the imaging device 2. The control device 11 of the present embodiment uses the parking space detection function to detect lines defining the boundary of the area from the created bird's-eye image IM1 and identifies candidate lines that define the parking area from the detected lines. Then, the control device 11 of the present embodiment uses the parking space detection function to determine whether or not the identified line candidates define the parking area. When it is determined that the identified line candidates define the parking area, the control device 11 determines whether or not the subject vehicle VI can be parked in the detected parking area.

In order to detect the lines defining the boundary of the area from the bird's-eye image IM1, the control device 11 of the present embodiment uses the parking space detection function to perform edge detection on the bird's-eye image IM1 and calculate the difference in luminance (contrast). Then, the control device 11 of the present embodiment uses the parking space detection function to identify each sequence of pixels whose luminance difference is equal to or larger than a predetermined value from the bird's-eye image IM1 and calculate the thickness and length of each line. The color of the detected line is not always required to be white and may be red, yellow, or any other color.

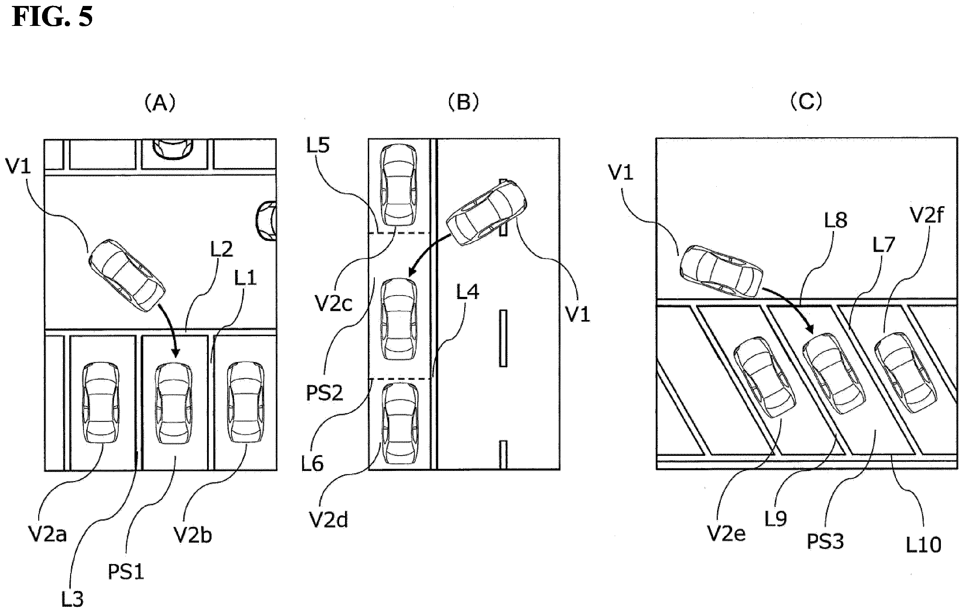

The control device 11 of the present embodiment uses a conventionally known image processing technique such as pattern matching to identify line candidates defining the parking area from the detected lines. Patterns to be used in the pattern matching are stored in advance in the ROM 111 of the control device 11 of the present embodiment. For example, FIG. 5(A) illustrates a scene in which the subject vehicle VI is about to be parked in a parking space PS1, which is a parking area in which the subject vehicle VI can be parked, between another vehicle V2a and another vehicle V2b. In the scene of FIG. 5(A), lines that define the parking area corresponding to the parking space PS1 are a line L1, a line L2, and a line L3, which are three of all sides forming the rectangular shape of the parking space PS1. The control device 11 of the present embodiment stores a combination of the lines L1, L2, and L3 that define the parking area, as a pattern corresponding to the scene of FIG. 5(A), in the ROM 111.

Further, FIG. 5(B) illustrates a scene in which the subject vehicle VI is about to be tandem-parked in a parking space PS2 between another vehicle V2c and another vehicle V2d. In the scene of FIG. 5(B), the control device 11 of the present embodiment causes the imaging device 2 to detect a line L4 as a line that defines a parking area corresponding to the parking space PS2 and further detect a curb or wall (not illustrated) positioned on the left side of another vehicle V2c and another vehicle V2d. However, the control device 11 of the present embodiment cannot define any parking area from the line L4, and the curb or the like. Therefore, in the scene of FIG. 5(B), the control device 11 of the present embodiment locates a virtual line L5 behind another vehicle V2c and a virtual line L6 in front of another vehicle V2d. Then, if any parking area can be defined by the line L4 detected by the imaging device 2 together with the virtual lines L5 and L6, it is determined that the line L4 is the line defining the parking area. The control device 11 of the present embodiment stores a combination of the lines L4, the virtual line L5 located behind another vehicle V2c, and the virtual line L6 located in front of another vehicle V2d, as a pattern corresponding to the scene of FIG. 5(B), in the ROM 111.

Further, FIG. 5(C) illustrates a scene in which the subject vehicle VI is about to be parked obliquely in a parking space PS3, which is a parking area in which the subject vehicle VI can be parked, between another vehicle V2e and another vehicle V2f. In the scene of FIG. 5(C), lines that define the parking area corresponding to the parking space PS3 are a line L7, a line L8, a line L9, and a line L10, which are sides that form a rectangular shape of the parking space PS3. The control device 11 of the present embodiment stores a combination of the lines L7, L8, L9, and L10 that are lines defining the parking area, as a pattern corresponding to the scene of FIG. 5(C), in the ROM 111.

Further, the control device 11 of the present embodiment checks the surroundings of the lines identified as the lines defining the parking area to detect the presence of any candidate line having a higher possibility of being a line that defines the parking area, than the identified lines. For example, if a line that is larger in luminance difference is newly identified, the control device 11 detects the newly identified line as a line candidate defining the parking area. To the contrary, when there is no candidate line having a higher possibility of being a line that defines the parking area than the identified lines, the control device 11 determines whether or not the identified lines define the parking area.

In order to determine whether or not the identified line candidates define the parking area, the control device 11 of the present embodiment determines whether or not the identified candidates satisfy predetermined conditions. The predetermined conditions are, for example: (1) any line having the length equal to or longer than a first line length distance threshold (e.g., length corresponding to 15 [m] in real distance) set in advance is not included in the lines identified as the line candidates defining the parking area; (2) any set of lines each having the length equal to or longer than a second line length distance threshold (e.g., length corresponding to 7 [m] in real distance) set in advance is not included in the sets of two adjacent lines within a first line-to-line distance range (e.g., length corresponding to 3 to 5 [m] in real distance) set in advance, among the lines identified as the line candidates defining the parking area, and (3) any set of lines each having the length equal to or longer than a third line length distance threshold (e.g., length corresponding to 15 [m] in real distance) set in advance is not included in the sets of two adjacent lines within a second line-to-line distance range (e.g., length corresponding to 2.5 to 5 [m] in real distance) set in advance, among the lines extracted as line candidates defining the parking area. If at least one of the above conditions (1), (2), and (3) is not satisfied, the control device 11 of the present embodiment determines that the identified line candidates define no parking area. To the contrary, when all of the conditions (1) to (3) are satisfied, the control device 11 of the present embodiment determines that the identified line candidates define a parking area and detects this parking area.

In order to determine whether or not the subject vehicle VI can be parked in the detected parking area, the control device 11 of the present embodiment determines whether or not there is any obstacle in the parking area using the information about the object detected by the ranging device 4. For example, in the scene of FIG. 5(A), the rear ranging device 4c of the subject vehicle V1 is used to determine the presence of any obstacle in the parking area. Further, in the scene of FIG. 5(B), the side ranging device 4b and the rear ranging device 4c of the subject vehicle VI are used to determine the presence of any obstacle in the parking area. Further, in the scene of FIG. 5(C), the side ranging device 4b and the rear ranging device 4c of the subject vehicle V1 are used to determine the presence of any obstacle in the parking area. Then, the control device 11 of the present embodiment detects a parking area in which no obstacle exists, as the parking space PS, from among the detected parking areas. To the contrary, when any obstacle exists in a detected parking area, the control device 11 of the present embodiment does not detect this parking area as the parking space PS.

Alternatively, in addition to this, the control device 11 of the present embodiment may determine whether or not the subject vehicle VI can be parked in the detected parking area by automated (or autonomous) driving. For example, in a case where there is a parking area facing a wall side and the passage width necessary to control the traveling motion by automated (or autonomous) driving cannot be secured, or in a case where there is a parking area surrounded by pillars of a building and information necessary to control the traveling motion by automated (or autonomous) driving cannot be detected, the detected parking area does not correspond to a parking area in which the parking by automated (or autonomous) driving is feasible. Then, if it is determined that no obstacle exists in the detected parking area and the parking by automated (or autonomous) driving is feasible, the control device 11 of the present embodiment detects the detected parking area as the parking space PS. To the contrary, when it is determined that the parking by automated (or autonomous) driving is unfeasible although no obstacle exists in the detected parking area, the control device 11 of the present embodiment does not detect the detected parking area as the parking space PS.

In order to detect the parking space PS, it is not always necessary to detect the parking area. When a certain area satisfies predetermined conditions, the control device 11 of the present embodiment may detect this area as the parking space PS. For example, the control device 11 of the present embodiment may detect an area in a predetermined range in which no obstacle exists and detect this area as the parking space PS. Further, the control device 11 of the present embodiment may use past travel information in the detection of the parking space PS.

The parking space display function of the control device 11 of the present embodiment is a function usable to present the parking space PS to the driver by displaying the parking space PS detected by the control device 11 on the display 121. The control device 11 of the present embodiment uses the parking space display function to present the parking space PS to the driver, for example, with a dotted line frame, as illustrated in FIG. 3. The driver selects the parking space PS for parking the subject vehicle VI from the parking spaces PS illustrated in FIG. 3. The parking space PS can be selected, for example, by touching the screen of the display 121.

The parking route calculation function of the control device 11 of the present embodiment is a function usable to calculate a parking route from the current position to the parking space PS, for parking the subject vehicle VI in the selected parking space PS. Especially, in a case where turning of the steering wheel is required in the middle of the parking route, the control device 11 of the present embodiment uses the parking route calculation function to set a position of turning the steering wheel, the steering wheel of the subject vehicle VI being turned at the position of turning the steering wheel, and generates a parking route for reaching the parking space PS via the position of turning the steering wheel from the current position of the subject vehicle V1. The parking route generated by the control device 11 of the present embodiment is a route determined considering a turning direction to which the subject vehicle VI turns in the route from the position of turning the steering wheel to the parking space, and is set in such a manner that the steering direction of the subject vehicle VI corresponds to the turning direction at the time when the subject vehicle is stopped at the position of turning the steering wheel.

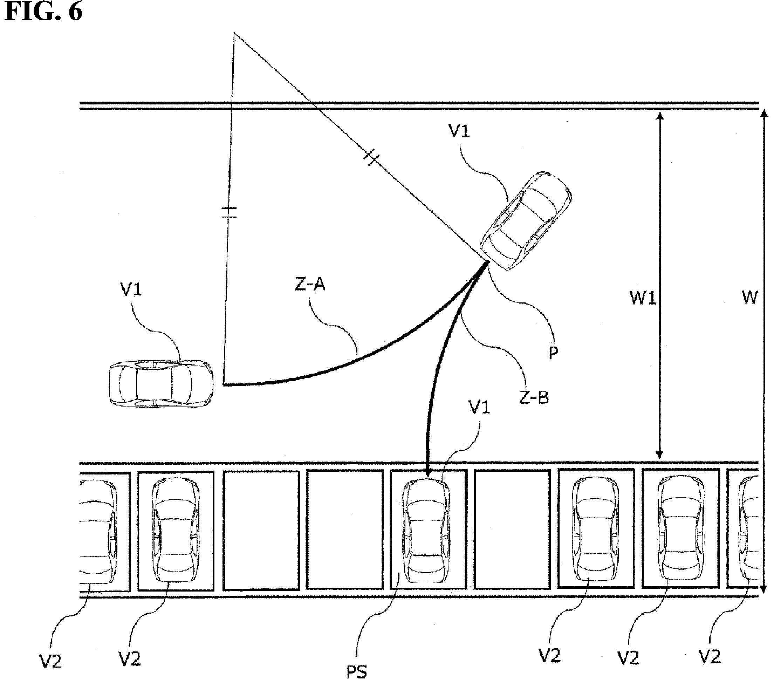

For example, in the traveling scene in which the subject vehicle VI moves from the current position to the parking space PS so as to be parked in the parking space PS, the control device 11 according to a comparative example of the present invention calculates a parking route as illustrated in a plan view of FIG. 6. That is, the control device 11 according to the comparative example of the present invention detects a passage width W and other vehicles V2 with the imaging device 2 and the ranging device 4, and calculates a width W1 of a passage in which the subject vehicle VI can travel to move from the current position to the parking space PS via a position of turning the steering wheel P. Then, the control device 11 sets the number of required the operations of turning the steering wheel, sets the position(s) of turning the steering wheel P, and calculates the parking route for moving from the current position to the parking space PS via the position of turning the steering wheel P. The parking route illustrated in FIG. 6 includes a section Z-A that is a section in which the subject vehicle VI moves from the current position to the position of turning the steering wheel P at a constant steering angle, and a section Z-B that is a section in which the subject vehicle VI moves from the position of turning the steering wheel P to the parking space PS. As the traveling motion, the subject vehicle VI performs static steering at the position of turning the steering wheel P to orient the steering direction toward the turning direction.

In the parking route according to the comparative example of the present invention, the time required for parking becomes longer since the subject vehicle VI is kept in a stopped state during the static steering. In order to shorten the time required for parking, in the parking route according to the comparative example of the present invention, for example, it may be possible to omit the static steering at the position of turning the steering wheel and instead speed up the traveling motion for orienting the steering direction toward the turning direction in the section Z-B. However, such traveling motion causes a great change in the movement of the subject vehicle V1 during acceleration, and therefore a sense of incongruity is imposed on an occupant of the subject vehicle VI. Further, the motion for orienting the steering direction toward the turning direction requires suppressing the vehicle speed of the subject vehicle VI until the turning is completed.

As mentioned above, including the position of turning the steering wheel P in the parking route forces the subject vehicle V1 to stop at the position of turning the steering wheel P in order to change the traveling direction. The present embodiment is different from the comparative example of the present invention in not performing the travel control for orienting the steering direction toward the turning direction during the speeded-up motion of the subject vehicle VI, and is characterized by orienting the steering direction toward the turning direction in the process of decreasing the vehicle speed to stop the subject vehicle V1. That is, the control device 11 of the present embodiment orients the steering direction toward the turning direction when the subject vehicle VI decreases the vehicle speed to stop (in other words, before or immediately in front of the position of turning the steering wheel P), thereby suppressing the sense of incongruity imposed on the occupant of the subject vehicle VI, shortening the time required for turning, and shortening the time during which the vehicle speed of the subject vehicle VI is suppressed after the operation of turning the steering wheel.

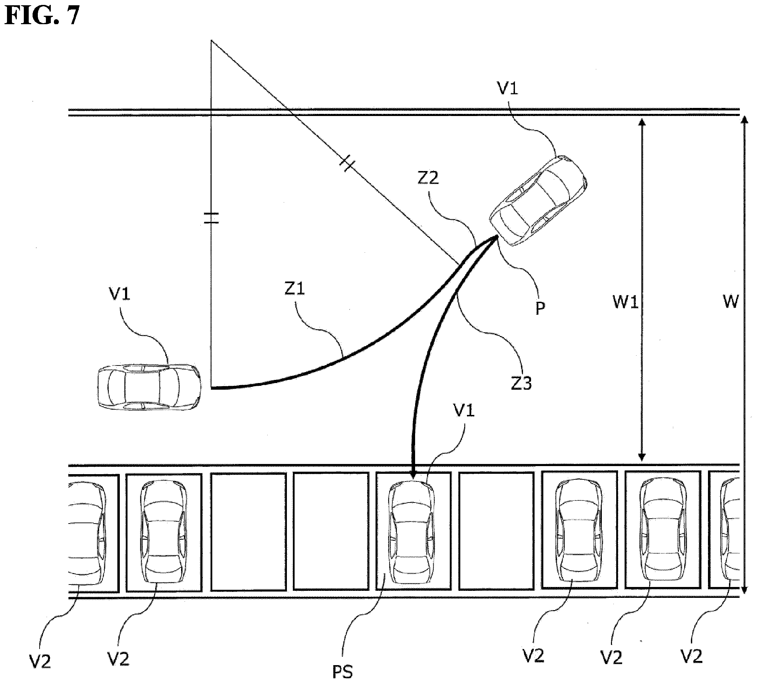

For example, in the traveling scene in which the subject vehicle VI moves from the current position to the parking space PS so as to be parked in the parking space PS, the control device 11 of the present embodiment uses the parking route calculation function to calculate a parking route illustrated in a plan view of FIG. 7. That is, the control device 11 of the present embodiment detects the passage width W and other vehicles V2 with the imaging device 2 and the ranging device 4 and calculates the width W1 of a passage in which the subject vehicle VI can travel to move from the current position to the parking space PS via the position of turning the steering wheel P. Then, the control device 11 of the present embodiment sets the number of required operations of turning the steering wheel, sets the position(s) of turning the steering wheel P, and calculates a parking route along which the subject vehicle VI moves from the current position to the parking space PS via the position of turning the steering wheel P. The parking route illustrated in FIG. 7 includes a first section Z1 that is a section from the current position of the subject vehicle VI to a position before or immediately in front of the position of turning the steering wheel P, in which the subject vehicle V1 moves at a constant steering angle, a second section Z2 that is a section following the first section Z1 and preceding the position of turning the steering wheel P, in which the position of turning the steering wheel P is included, and a third section Z3 that is a section following the second section Z2, in which the subject vehicle VI is turned toward the direction of moving to the parking space PS. In the parking route illustrated in FIG. 7, the subject vehicle VI moves at a constant steering angle in the first section Z1. However, in the parking route of the present embodiment, the subject vehicle VI is not required to move at a constant steering angle. Further, in the parking route of the present embodiment, the subject vehicle VI may move at a constant steering angle in the third section Z3.

Regarding the calculation of the width W1 of the passage in which the subject vehicle VI can travel, in the traveling scene illustrated in FIG. 7, the control device 11 of the present embodiment detects the passage width W and obstacles around the subject vehicle VI, for example, with the imaging device 2a arranged on the front grill part of the vehicle, the imaging device 2b arranged beneath the left door mirror of the vehicle, the imaging device 2c arranged beneath the right door mirror of the vehicle, and the imaging device 2d arranged near the rear bumper of the vehicle, as well as the front ranging device 4a, the side ranging devices 4b, and the rear ranging device 4c. If no obstacle is detected, the subject vehicle VI can move from the current position to the parking space PS within the entire passage width W. To the contrary, in the case of detecting any obstacle, the subject vehicle VI can use only a part of the passage width W for traveling. In the traveling scene illustrated in FIG. 7, because of the presence of other vehicles V2 in the advancing direction of the subject vehicle VI, the width of the passage in which the subject vehicle VI can travel to move from the current position to the parking space PS via the position of turning the steering wheel P is W1.

Regarding the setting of the position of turning the steering wheel P, the control device 11 of the present embodiment sets the position of turning the steering wheel P by using at least one of the width W1 of the passage in which the subject vehicle VI can travel to move from the current position to the parking space PS via the position of turning the steering wheel P, calculated by the parking route calculation function, the minimum turning radius of the subject vehicle VI, the steering speed of the subject vehicle VI, and the vehicle speed of the subject vehicle VI. Further, in the setting of the position of turning the steering wheel P, the control device 11 of the present embodiment may use the entire length and the entire width of the subject vehicle VI. The width W1 of the passage in which the subject vehicle VI can travel, and the minimum turning radius, the entire length, and the entire width of the subject vehicle VI are fixed in predetermined values depending on the traveling scene and the subject vehicle VI. To the contrary, the steering speed of the subject vehicle VI and the vehicle speed of the subject vehicle VI can be set to appropriate values within a predetermined range.

For example, the control device 11 of the present embodiment sets the position of turning the steering wheel P in such a way as to minimize the time required for the subject vehicle V1 to move from the current position to the parking space PS. For example, even in a case where only one operation of turning the steering wheel enables the subject vehicle VI to move from the current position to the parking space PS, if a movement including three operations of turning the steering wheel can shorten the time required to complete the movement, the control device 11 of the present embodiment sets three positions of turning the steering wheels P. Alternatively, the control device 11 of the present embodiment may set the position of turning the steering wheel P in such a way as to minimize the number of operations of turning the steering wheel required for the subject vehicle VI to move from the current position to the parking space PS. Upon completing the settings with respect to the current position of the subject vehicle VI, the position of turning the steering wheel P, and the parking space PS, the control device 11 of the present embodiment can calculate the parking route.

The route in the second section Z2 of the present embodiment is a route determined considering the turning direction of the subject vehicle VI in the third section Z3 oriented toward the parking space PS from the position of turning the steering wheel P, and is set in such a manner that the steering direction of the subject vehicle VI corresponds to the turning direction at the time when the subject vehicle VI is stopped at the position of turning the steering wheel P. The steering direction is, for example, the orientation of the steering angle of the steering wheel of the subject vehicle VI, or the orientation of the front wheels of the subject vehicle VI facing ahead of the subject vehicle VI. For example, in the traveling scene illustrated in FIG. 7, at the end point of the first section Z1, the orientation of the steering angle of the steering wheel of the subject vehicle VI moving forward and the orientation of the front wheels of the subject vehicle V1 facing ahead of the subject vehicle VI are directed to the left. To the contrary, in the third section Z3 following the position of turning the steering wheel P, the orientation of the steering angle of the steering wheel of the subject vehicle VI moving backward and the orientation of the front wheels of the subject vehicle VI facing ahead of the subject vehicle VI are directed to the right. In this case, the control device 11 of the present embodiment determines that it is necessary to switch the steering direction from the left to the right before and after the position of turning the steering wheel P, and calculates the route in the second section Z2 such that the orientation of the steering angle of the steering wheel of the subject vehicle V1, or the orientation of the front wheels of the subject vehicle V1 facing ahead of the subject vehicle VI, is directed to the right, for example, when the subject vehicle VI is stopped at the position of turning the steering wheel P. This can suppress such traveling motion that imposes a sense of incongruity on the occupant of the subject vehicle VI. In addition, the time required for turning can be shortened, and the time during which the vehicle speed of the subject vehicle VI is suppressed after the operation of turning the steering wheel can be shortened.

The route in the second section Z2 of the present embodiment will be sufficient if the steering direction of the subject vehicle VI traveling along this route corresponds to the turning direction at the time when the subject vehicle VI is stopped at the position of turning the steering wheel P. Alternatively, the steering angle of the subject vehicle VI at the time when the subject vehicle VI is stopped at the position of turning the steering wheel P may be set to be equal to the steering angle of the subject vehicle VI that starts traveling from the position of turning the steering wheel P toward the parking space PS in the third section. As a result, it is unnecessary to change the steering direction when the subject vehicle VI starts acceleration from the stopped state, and therefore it is unnecessary to suppress the vehicle speed of the subject vehicle VI until the turning is completed.

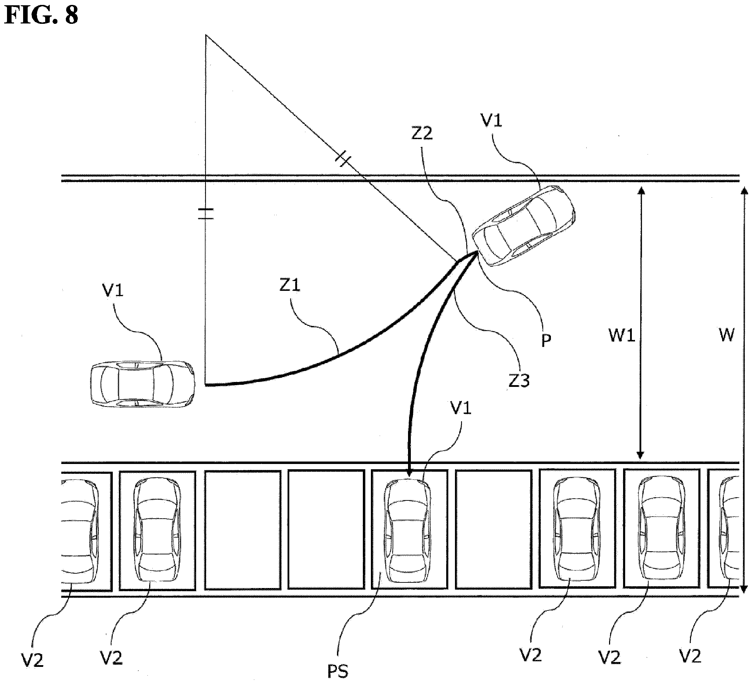

Further, the control device 11 of the present embodiment can increase and decrease the length of the second section Z2 according to the width W1 of the passage in which the subject vehicle VI can travel. For example, a traveling scene illustrated in FIG. 8 is the same as the traveling scene illustrated in FIG. 7, except that the width W1 of the passage in which the subject vehicle V1 can travel is narrower than that in FIG. 7. In this case, the control device 11 of the present embodiment uses the parking route calculation function to calculate the parking route illustrated in the plan view of FIG. 8 in which the length of the second section Z2 is set to be shorter than the length of the second section Z2 illustrated in FIG. 7. Increasing and decreasing the length of the second section Z2 illustrated in FIG. 8 is feasible by changing the steering speed of the subject vehicle VI and/or the vehicle speed of the subject vehicle VI. For example, shortening the length of the second section Z2 can be achieved by increasing the steering speed of the subject vehicle VI and/or decreasing the vehicle speed of the subject vehicle VI. To the contrary, increasing the length of the second section Z2 can be achieved by decreasing the steering speed of the subject vehicle VI and/or increasing the vehicle speed of the subject vehicle VI. Alternatively, the length of the second section Z2 may be shortened in advance and subsequently increased in the middle of the parking assist, or the length may be increased and decreased during the parking assist control.

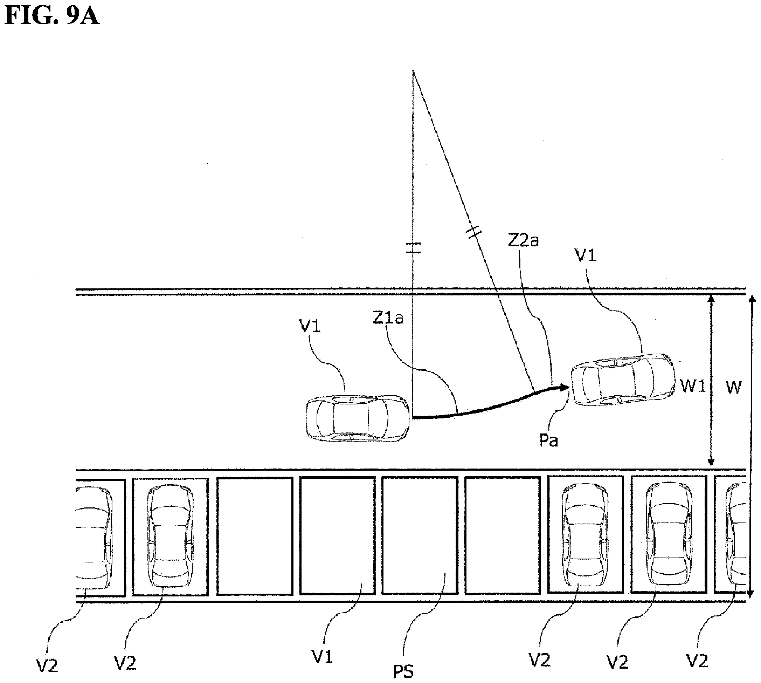

Further, in the case where the number of required operations of turning the steering wheel is two or more, the route in the second section Z2 of the present embodiment can be set every time the subject vehicle VI is turned around. For example, traveling scenes illustrated in FIGS. 9A to 9D are the same as the traveling scenes illustrated in FIGS. 7 and 8, except that the width W1 of the passage in which the subject vehicle VI can travel is narrower than that in FIG. 8. In this case, the control device 11 of the present embodiment uses the parking route calculation function to set three positions of turning the steering wheels Pa to Pc such that the subject vehicle VI can move from the current position to the parking space PS and then calculate the route in the second section Z2 of the present embodiment in each of the first and second operations of turning the steering wheel.

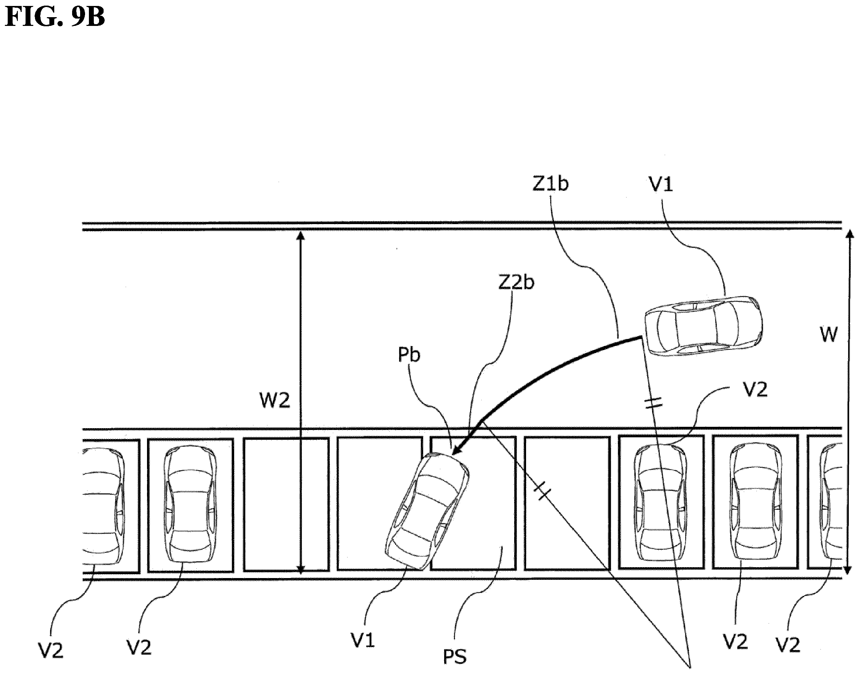

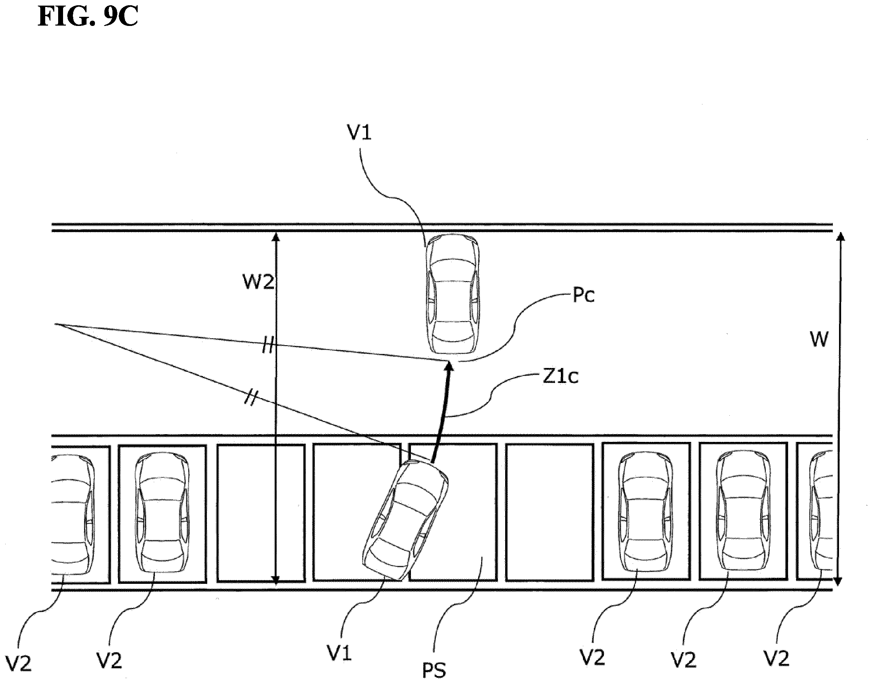

That is, in the traveling scene of FIG. 9A, the control device 11 of the present embodiment detects the passage width W and other vehicles V2 with the imaging device 2 and the ranging device 4, and calculates the width W1 of the passage in which the subject vehicle VI can travel to move from the current position to the parking space PS via the position of turning the steering wheel P. In the traveling scene of FIG. 9A, since the width W1 of the passage in which the subject vehicle VI can travel is narrow, the subject vehicle VI cannot directly move to the parking space PS by a single operation of turning the steering wheel. Therefore, the control device 11 of the present embodiment sets the second position of turning the steering wheel Pb illustrated in FIG. 9B after setting the first position of turning the steering wheel Pa. In the second operation of turning the steering wheel, the subject vehicle VI moves backward to move to the position of turning the steering wheel Pb. In this case, since no other vehicle V2 is detected as an obstacle, the control device 11 of the present embodiment calculates the passage width W as a width W2 of the passage in which the subject vehicle can travel. Further, after setting the second position of turning the steering wheel Pb, the control device 11 of the present embodiment sets the third position of turning the steering wheel Pc illustrated in FIG. 9C. Similar to the second operation of turning the steering wheel, since no other vehicle V2 is detected as an obstacle even in the third operation of turning the steering wheel, the control device 11 of the present embodiment calculates the passage width W as the width W2 of the passage in which the subject vehicle can travel. Then, the control device 11 of the present embodiment calculates a parking route along which the subject vehicle VI can move from the current position to the parking space PS via the positions of turning the steering wheel Pa, Pb, and Pc.

The control device 11 of the present embodiment calculates the parking route for enabling the subject vehicle VI to move from the current position to the position of turning the steering wheel Pa illustrated in FIG. 9A. The parking route illustrated in FIG. 9A includes a first section Z1a and a second section Z2a. The route in the second section Z2a is a route determined considering the turning direction of the subject vehicle VI moving from the position of turning the steering wheel Pa to the position of turning the steering wheel Pb, and is set in such a manner that the steering direction of the subject vehicle VI corresponds to the turning direction at the time when the subject vehicle VI is stopped at the position of turning the steering wheel Pa. In this case, the control device 11 of the present embodiment determines that it is necessary to switch the steering direction from the left to the right before and after the position of turning the steering wheel Pa, and calculates the route in the second section Z2a in such a manner that the orientation of the steering angle of the steering wheel of the subject vehicle VI, or the orientation of the front wheels of the subject vehicle VI facing ahead of the subject vehicle VI, is directed to the right, for example, when the subject vehicle VI is stopped at the position of turning the steering wheel Pa.

The control device 11 of the present embodiment calculates the parking route for enabling the subject vehicle VI to move from the position of turning the steering wheel Pa to the position of turning the steering wheel Pb illustrated in FIG. 9B. The parking route illustrated in FIG. 9B includes a first section Z1b and a second section Z2b. The route in the second section Z2b is a route determined considering the turning direction of the subject vehicle VI moving from the position of turning the steering wheel Pb to the position of turning the steering wheel Pc, and is set in such a manner that the steering direction of the subject vehicle VI corresponds to the turning direction at the time when the subject vehicle VI is stopped at the position of turning the steering wheel Pb. In this case, the control device 11 of the present embodiment determines that it is necessary to switch the steering direction from the right to the left before and after the position of turning the steering wheel Pb, and calculates the route in the second section Z2b in such a manner that the orientation of the steering angle of the steering wheel of the subject vehicle VI, or the orientation of the front wheels of the subject vehicle VI facing ahead of the subject vehicle VI, is directed to the left, for example, when the subject vehicle VI is stopped at the position of turning the steering wheel Pb.

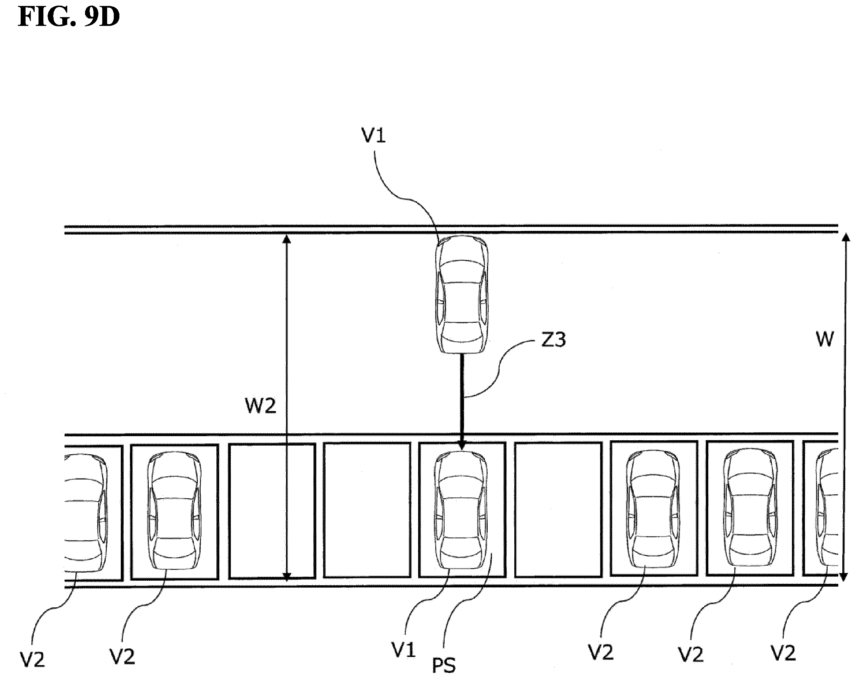

The control device 11 of the present embodiment calculates the parking route for enabling the subject vehicle VI to move from the position of turning the steering wheel Pb to the position of turning the steering wheel Pc illustrated in FIG. 9C. The parking route illustrated in FIG. 9C is composed of a first section Z1c. In this case, the subject vehicle VI can move from the position of turning the steering wheel Pb to the position of turning the steering wheel Pc at a constant steering angle, and no steering at the position of turning the steering wheel Pc is required. Accordingly, it is unnecessary to set the second section Z2 of the present embodiment. Subsequently, the control device 11 of the present embodiment calculates the parking route for enabling the subject vehicle VI to move backward and straight from the position of turning the steering wheel Pc to the parking space PS illustrated in FIG. 9D. The parking route illustrated in FIG. 9D is composed of the third section Z3.

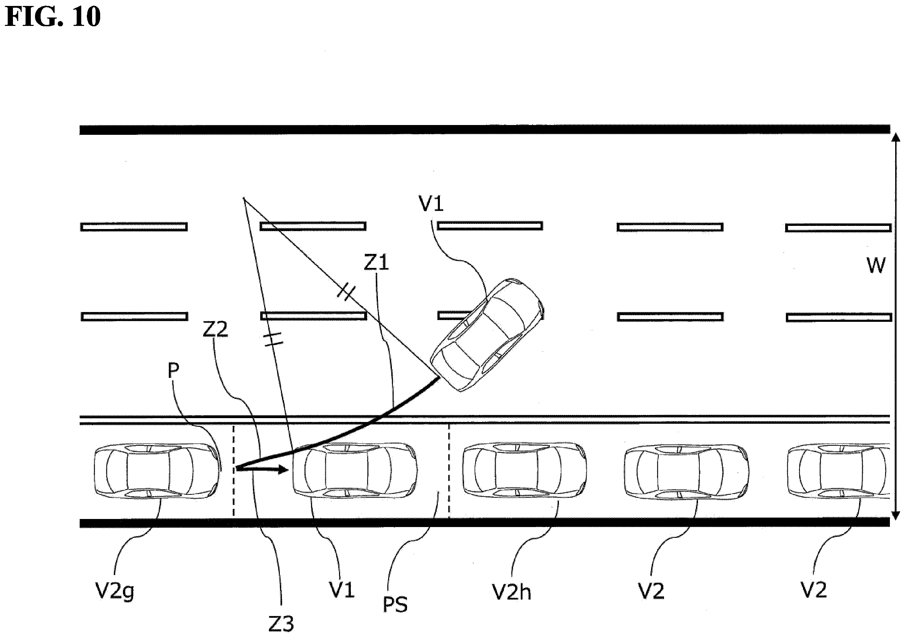

Further, the control device 11 of the present embodiment can perform parking assist even in tandem parking. For example, even in a traveling scene illustrated in FIG. 10 in which the subject vehicle VI is about to be tandem-parked in the parking space PS between other vehicles V2g and V2h, the control device 11 of the present embodiment uses the parking route calculation function to calculate a parking route. That is, the control device 11 of the present embodiment detects the passage width W and other vehicles V2g and V2h with the imaging device 2 and the ranging device 4, and calculates the width W1 of the passage in which the subject vehicle VI can travel to move from the current position to the parking space PS via the position of turning the steering wheel P. In FIG. 10, the width W1 of the passage in which the subject vehicle VI can travel is equal to the detected passage width W.

Next, the control device 11 of the present embodiment sets the number of required operations of turning the steering wheel, sets the positions of turning the steering wheel P, and calculates the parking route along which the subject vehicle VI moves from the current position to the parking space PS via the position of turning the steering wheel P. In the traveling scene of tandem parking illustrated in FIG. 10, the control device 11 of the present embodiment sets one position of turning the steering wheel P. Then, the control device 11 of the present embodiment calculates the parking route for the movement from the current position to the parking space PS via the position of turning the steering wheel P. The parking route for tandem parking illustrated in FIG. 10 includes the first section Z1, the second section Z2, and the third section Z3. In this tandem parking, the steering direction of the subject vehicle VI is switched from the left to the right before and after the position of turning the steering wheel P. Therefore, the control device 11 calculates the route in the second section Z2 in such a manner that the steering direction of the subject vehicle V1 is changed to the right when the subject vehicle VI is stopped at the position of turning the steering wheel P.

The traveling motion planning function of the control device 11 of the present embodiment is a function of planning the traveling motion that enables the subject vehicle VI to be parked in the parking space PS along the parking route calculated by the parking route calculation function. The control device 11 of the present embodiment uses the traveling motion planning function to plan the control of the vehicle speed and steering angle of the subject vehicle VI such that the subject vehicle VI moves to the parking space PS along the parking route.

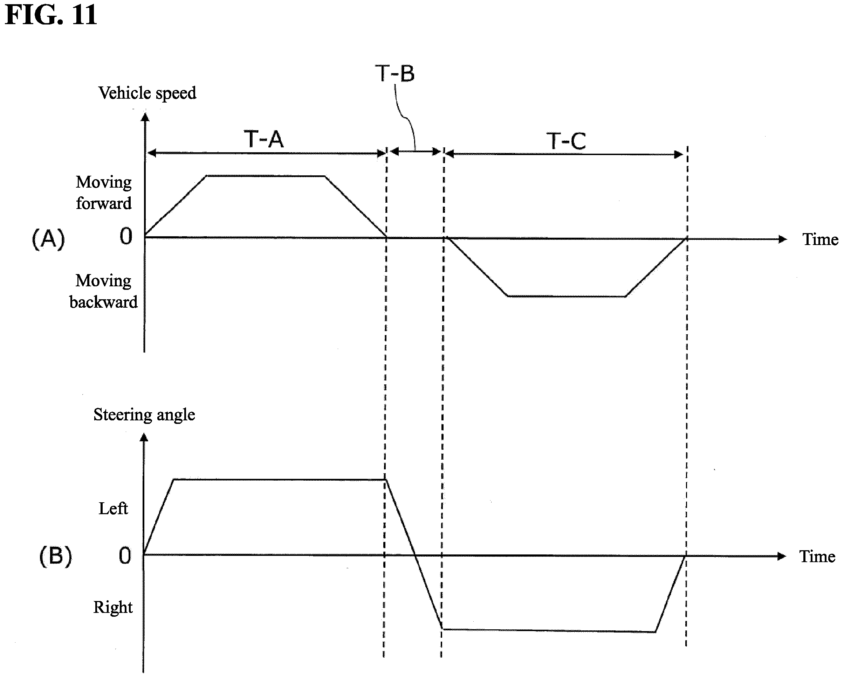

FIG. 11 is a timing diagram illustrating the traveling motion plan in the case where the subject vehicle VI moves from the current position to the parking space PS, for example, along the parking route according to the comparative example of the present invention illustrated in FIG. 6. FIG. 11(A) is a timing diagram of vehicle speed, and FIG. 11(B) is a timing diagram of steering angle. In FIG. 11(A), the horizontal axis represents time and the vertical axis represents vehicle speed. When the vehicle speed is a positive value, the subject vehicle VI is moving forward. When the vehicle speed is a negative value, the subject vehicle VI is moving backward. The horizontal axis of FIG. 11(B) represents time and corresponds to the horizontal axis of FIG. 11(A). The vertical axis of FIG. 11(B) represents steering angle. When the steering angle is a positive value, the subject vehicle VI is turning to the left. When the steering angle is a negative value, the subject vehicle VI is turning to the right.

The parking route illustrated in FIG. 6 includes the section Z-Ain which the subject vehicle VI moves from the current position to the position of turning the steering wheel P, the position of turning the steering wheel P at which the subject vehicle VI performs static steering, and the section Z-B in which the subject vehicle V1 moves from the position of turning the steering wheel P to the parking space PS. In FIG. 11, the vehicle speed and the steering angle in the section T-A, the vehicle speed and the steering angle in the section T-B, and the vehicle speed and the steering angle in the section T-C correspond to the traveling motion of the subject vehicle VI in the section Z-A, the static steering of the subject vehicle VI at the position of turning the steering wheel P, and the traveling motion of the subject vehicle VI in the section Z-B, respectively. In the parking route according to the comparative example of the present invention, because of the static steering performed in the section T-B, the subject vehicle VI is kept in a stopped state while the steering direction is oriented toward the turning direction. Accordingly, it takes time to complete the traveling motion. The static steering operation causes wear of the wheels and heat generation at the steering actuator, which imposes a burden on the subject vehicle VI.

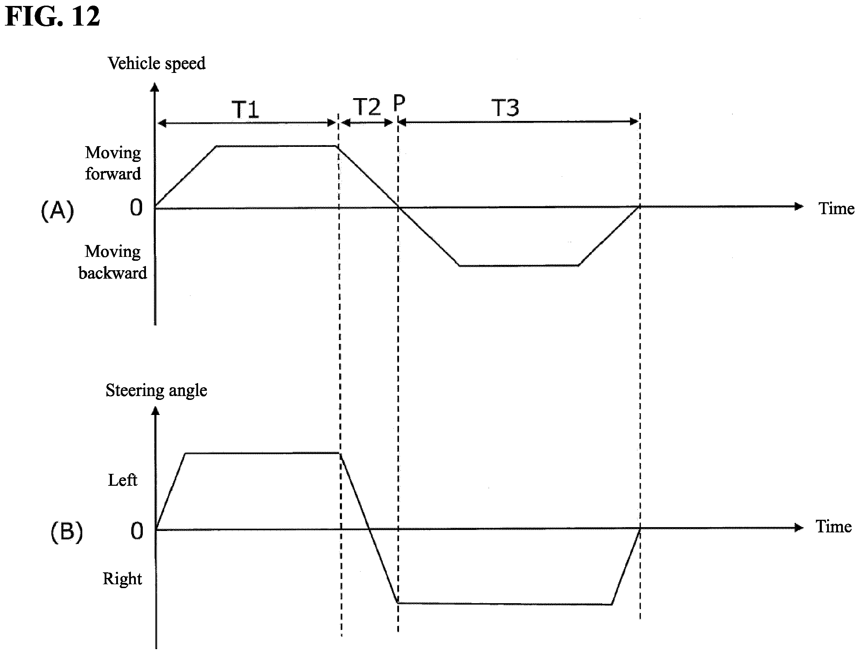

To the contrary, the control device 11 of the present embodiment creates the traveling motion plan illustrated in the timing diagram of FIG. 12, for example, when the subject vehicle VI moves from the current position to the parking space PS along the parking route of the present embodiment illustrated in FIG. 7. The notation method for the vehicle speed of FIG. 12(A) and the steering angle of FIG. 12(B) conforms to that in FIG. 11(A) and FIG. 11(B).

The parking route illustrated in FIG. 7 includes the first section Z1, the second section Z2, and the third section Z3. In FIG. 12, the vehicle speed and the steering angle in a section T1, the vehicle speed and the steering angle in a section T2, and the vehicle speed and the steering angle in a section T3 correspond to the traveling motion of the subject vehicle VI in the first section Z1 illustrated in FIG. 7, the traveling motion of the subject vehicle VI in the second section Z2 illustrated in FIG. 7, and the traveling motion of the subject vehicle VI in the third section Z3 illustrated in FIG. 7, respectively. In the parking route illustrated in FIG. 7, turning from the left to the right is taken place before the vehicle speed becomes 0 at the position of turning the steering wheel P, that is, before the subject vehicle VI is stopped. Therefore, it is unnecessary to perform static steering required in the parking route according to the comparative example of the present invention. The subject vehicle VI can quickly start moving backward after stopping at the position of turning the steering wheel P. This can shorten the time required for parking. Further, since no turning is required when accelerating in the section T3 of FIG. 12, accelerating at a greater level than that in FIG. 11 is feasible in the section T3. Thus, the time required for parking can be shortened.

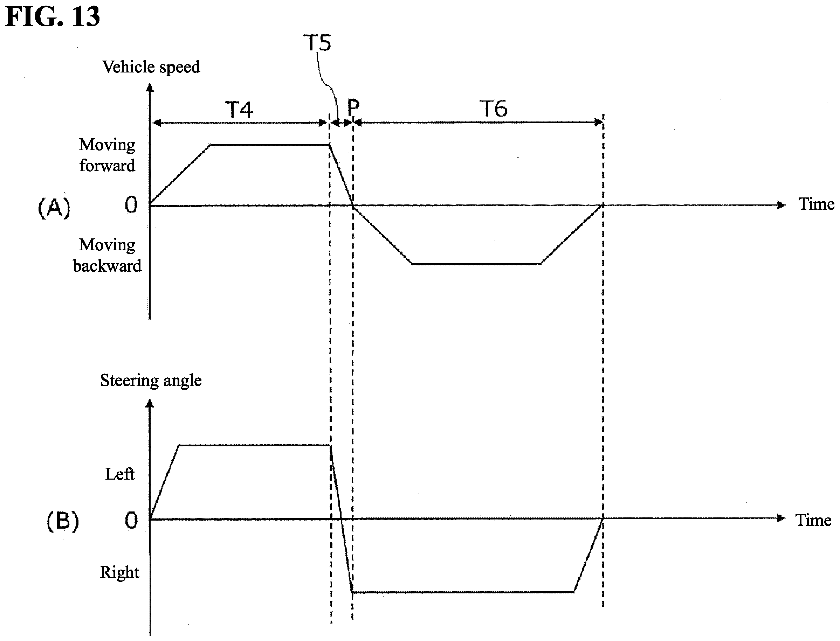

Further, the control device 11 of the present embodiment creates the traveling motion plan illustrated in the timing diagram of FIG. 13, for example, when the subject vehicle VI moves from the current position to the parking space PS along the parking route of the present embodiment illustrated in FIG. 8. The notation method for the vehicle speed of FIG. 13(A) and the steering angle of FIG. 13(B) conforms to that in FIG. 11(A) and FIG. 11(B).

The parking route illustrated in FIG. 8 is similar to the parking route illustrated in FIG. 7 in including the first section Z1, the second section Z2, and the third section Z3, but the second section Z2 illustrated in FIG. 8 is shorter than the second section Z2 illustrated in FIG. 7. In FIG. 13, the vehicle speed and the steering angle in a section T4, the vehicle speed and the steering angle in a section T5, and the vehicle speed and the steering angle in a section T6 correspond to the traveling motion of the subject vehicle VI in the first section Z1 illustrated in FIG. 8, the traveling motion of the subject vehicle VI in the second section Z2 illustrated in FIG. 8, and the traveling motion of the subject vehicle VI in the third section Z3 illustrated in FIG. 8, respectively. The traveling motion plan illustrated in FIG. 13 is the same as the traveling motion plan of FIG. 12, except for the section T5. In the traveling motion plan illustrated in FIG. 13, in order to shorten the length of the second section Z2, it is intended in the section T5 to stop the subject vehicle VI with the acceleration larger than that in the section T2 of FIG. 12 and perform the turning at a higher steering speed. This can shorten the length of the second section Z2 illustrated in FIG. 8, compared to the length of the second section Z2 illustrated in FIG. 7. Since the traveling motion plan illustrated in FIG. 13 includes the section T5 that is shorter than the section T2, the time required for parking can be shortened, compared to the traveling motion plan illustrated in FIG. 12.

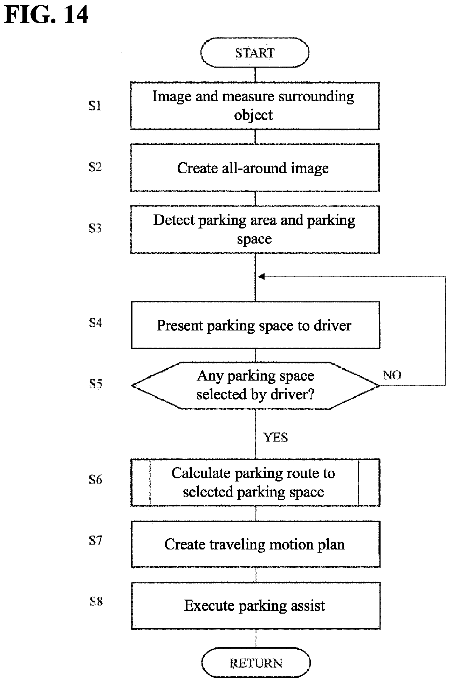

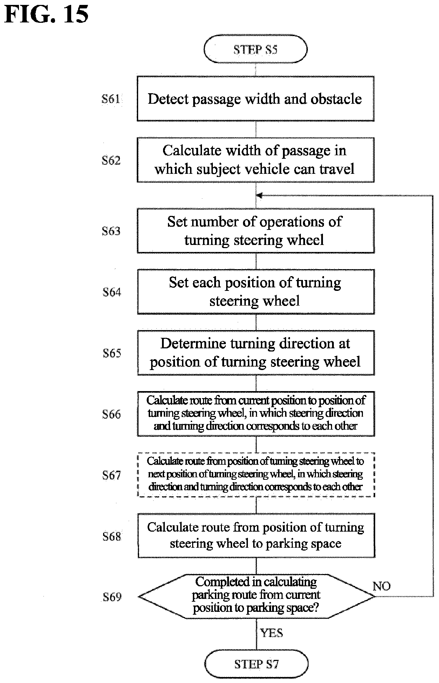

Next, parking assist processing by the control device 11 of the present embodiment will be described with reference to FIGS. 14 to 15. FIG. 14 is an exemplary flowchart illustrating basic processing of the parking assist of the present embodiment. FIG. 15 is a flowchart illustrating an exemplary subroutine of step S6 of FIG. 14. The control device 11 executes travel control processing described below at predetermined time intervals. In the following description, it is assumed that the control device 11 of the present embodiment refers to the surrounding environmental relevant information in determining the traveling scene in which the subject vehicle VI is parked in the parking space PS, and executes the parking assist programs.

In step S1 of FIG. 14, the control device 11 of the present embodiment uses the environmental information acquisition function to image the surroundings of the subject vehicle with the imaging device 2 and acquires image data including each obstacle existing around the subject vehicle. Further, in step S1, the control device 11 of the present embodiment uses the environmental information acquisition function to detect the presence of any obstacle, pedestrian, or another vehicle around the subject vehicle VI, the position of each object, and the distance to each object, with the ranging device 4.

In step S2, the control device 11 of the present embodiment uses the parking space detection function to cause the image processing device 3 to create the bird's-eye image IM1 from the images acquired by the imaging device 2. In step S3, the control device 11 of the present embodiment uses the parking space detection function to detect a parking area from the bird's-eye image IM1 and detect the parking spaces PS from the parking area, with the imaging device 2 and the ranging device 4.

In step S4, the control device 11 of the present embodiment uses the parking space display function to present the parking spaces PS to a driver, by using the display 121. In step S5, the control device 11 of the present embodiment determines whether or not the driver has selected any parking space PS in which the subject vehicle VI is to be parked from among the parking spaces PS. If the driver has not selected any parking space PS in which the subject vehicle VI is to be parked from among the parking spaces PS (NO in step S5), the processing returns to step S4, in which the control device 11 of the present embodiment presents the parking spaces PS to the driver. To the contrary, when the driver has selected the parking space PS in which the subject vehicle V1 is to be parked from among the parking spaces PS (YES in step S5), the processing proceeds to step S6.

In step S6, the control device 11 of the present embodiment uses the parking route calculation function to calculate the parking route for enabling the subject vehicle VI to move from the current position to the parking space PS selected by the driver. In step S7, the control device 11 of the present embodiment uses the traveling motion planning function to plan the traveling motion of the subject vehicle VI to be parked along the calculated parking route. Then, in step S8, the control device 11 of the present embodiment executes parking assist for the subject vehicle VI so as to realize the planed traveling motion along the calculated parking route, using the vehicle controller 5, the driving system 6, the vehicle speed sensor 7, and the steering angle sensor 8.

Next, an exemplary subroutine of step S6 of FIG. 14 will be described with reference to FIG. 15.

In step S61 of FIG. 15, the control device 11 of the present embodiment uses the parking route calculation function to detect the passage width W and any obstacle such as another vehicle V2 with the imaging device 2 and the ranging device 4. In step S62, the control device 11 of the present embodiment uses the parking route calculation function to calculate the width W1 or W2 of the passage in which the subject vehicle can travel.

In step S63, the control device 11 of the present embodiment uses the parking route calculation function to set the number of operations of turning the steering wheel using at least one of the width W1 of the passage in which the subject vehicle VI can travel, the minimum turning radius of the subject vehicle VI, the steering speed of the subject vehicle VI, and the vehicle speed of the subject vehicle VI. Further, in step S64, the control device 11 of the present embodiment uses the parking route calculation function to set each position of turning the steering wheel P with reference to the number of operations of turning the steering wheel having been set.

In step S65, the control device 11 of the present embodiment uses the parking route calculation function to determine the turning direction at the position of turning the steering wheel. In step S66, the control device 11 of the present embodiment uses the parking route calculation function to calculate the route from the current position to the position of turning the steering wheel P, in which the steering direction of the subject vehicle V1 corresponds to the turning direction, based on the set position of turning the steering wheel P and the determined turning direction. If two or more positions of turning the steering wheel are set, then in step S67, the control device 11 of the present embodiment uses the parking route calculation function to calculate the route from the position of turning the steering wheel to the next position of turning the steering wheel, in which the steering direction of the subject vehicle VI corresponds to the turning direction. In FIG. 15, step S67 is indicated by a dotted line because it is an arbitrary step. Then, in step S68, the control device 11 of the present embodiment uses the parking route calculation function to calculate the route from the position of turning the steering wheel to the parking space.

In step S69, the control device 11 of the present embodiment determines whether or not the parking route for enabling the subject vehicle VI to move from the current position to the parking space PS has been calculated by the parking route calculation function. If the parking route for enabling the subject vehicle VI to move from the current position to the parking space PS has been calculated (YES in step S69), the processing proceeds to step S7 of FIG. 14, in which the control device 11 of the present embodiment uses traveling motion planning function to plan the traveling motion of the subject vehicle VI so as to be parked along the calculated parking route. To the contrary, when the parking route for enabling the subject vehicle V1 to move from the current position to the parking space PS has not been calculated (NO in step S69), the processing returns to step S63, in which the control device 11 of the present embodiment uses the parking route calculation function to set the number of operations of turning the steering wheel again.

As described above, in the parking assist apparatus 1 and the parking assist method according to the present embodiment, the parking space PS for parking the subject vehicle VI is detected, the position of turning the steering wheel, the steering wheel being turned at the position of turning the steering wheel P, is set, the parking route for reaching from the current position of the subject vehicle VI to the parking space PS via the position of turning the steering wheel P is generated, and the subject vehicle VI is controlled so as to autonomously travel along the parking route. The parking route includes the route from the current position of the subject vehicle VI to the position of turning the steering wheel P, which is determined considering the turning direction to which the subject vehicle VI turns in the route for traveling from the position of turning the steering wheel P to the parking space PS and is set in such a manner that the steering direction of the subject vehicle VI corresponds to the turning direction at the time when the subject vehicle VI is stopped at the position of turning the steering wheel P. Accordingly, the steering direction is oriented toward the turning direction when the subject vehicle VI decreases the vehicle speed to stop. This can suppress the sense of incongruity imposed on the occupant by the traveling motion of the subject vehicle VI. In addition, it is possible to suppress the static steering amount when the subject vehicle VI turns, shorten the time required for turning, and shorten the time required for parking. Further, the steering direction of the subject vehicle VI is already oriented to the turning direction at the time when the subject vehicle VI is stopped for turning the steering wheel (cutting the wheel). Therefore, the amount of turning required after reaching the position of turning the steering wheel can be suppressed. Moreover, suppressing the amount of turning required after reaching the position of turning the steering wheel can shorten the time during which the vehicle speed of the subject vehicle VI is suppressed and accordingly shorten the time required for parking.

In addition, in the parking assist apparatus 1 and the parking assist method according to the present embodiment, the steering angle of the subject vehicle VI at the time when the subject vehicle VI is stopped at the position of turning the steering wheel P is set to be equal to the steering angle when the subject vehicle VI starts traveling toward the parking space PS from the position of turning the steering wheel P. This can shorten the time required for parking, because it is unnecessary to switch the steering direction when the subject vehicle VI starts accelerating form the stopped state, and it is unnecessary to suppress the vehicle speed of the subject vehicle VI until the turning is completed. Further, even when the subject vehicle VI is stopped at a position beyond the position of turning the steering wheel P, since the subject vehicle V1 exists on the route of the third section Z3, it is unnecessary to switch the steering direction when the subject vehicle V1 starts accelerating from the stopped state.

In addition, in the parking assist apparatus 1 and the parking assist method according to the present embodiment, the parking route includes at least the first section Z1 that is the section from the current position of the subject vehicle VI to the position before the position of turning the steering wheel P, in which the subject vehicle moves at the constant steering angle, the second section Z2 that is the section following the first section Z1 and preceding the position of turning the steering wheel P, in which the position of turning the steering wheel P is included, and the third section Z3 that is the section following the second section Z2, in which the subject vehicle V1 is turned toward the direction of moving to the parking space PS. This can suppress the sense of incongruity imposed on the occupant and shorten the time required for parking, and therefore the parking route can be appropriately calculated.

In addition, in the parking assist apparatus 1 and the parking assist method according to the present embodiment, the length of the second section Z2 is set to be relatively shorter, when the width W1 of the passage enabling the subject vehicle VI to travel for moving from the current position of the subject vehicle to the parking space PS via the position of turning the steering wheel P is narrow, compared to a case where the passage width W1 is wide. Thus, even when the passage width W1 is narrow, it is possible to suppress the static steering amount when the subject vehicle VI turns, shorten the time required for turning, and shorten the time required for parking. Further, even when the passage width W1 is narrow, it is possible to suppress the amount of turning required after reaching the position of turning the steering wheel, shorten the time during which the vehicle speed of the subject vehicle VI is suppressed, and shorten the time required for parking.

In addition, in the parking assist apparatus 1 and the parking assist method according to the present embodiment, the length of the second section Z2 is set to be relatively shorter, when the width W1 of the passage in which the subject vehicle VI can travel to move from the current position to the parking space PS via the position of turning the steering wheel P is less than a predetermined value, compared to a case where the passage width W1 is equal to or greater than the predetermined value. Thus, even when the passage width W1 is narrow, it is possible to suppress the static steering amount when the subject vehicle VI turns, shorten the time required for turning, and shorten the time required for parking. Further, even when the passage width W1 is narrow, it is possible to suppress the amount of turning required after reaching the position of turning the steering wheel, shorten the time during which the vehicle speed of the subject vehicle VI is suppressed, and shorten the time required for parking. The predetermined value to be set in advance for the passage width W1 can be set to an appropriate value using the minimum turning radius, the entire length, and the entire width of the subject vehicle VI or the like.

In addition, in the parking assist apparatus 1 and the parking assist method according to the present embodiment, the narrower the width W1 of the passage in which the subject vehicle VI can travel to move from the current position to the parking space PS via the position of turning the steering wheel P, the shorter the set length of the second section Z2. This can suppress the static steering amount when the subject vehicle VI turns, shorten the time required for turning, and shorten the time required for parking, even when the passage width W1 is narrow. Further, this can suppress the amount of turning required after reaching the position of turning the steering wheel, shorten the time during which the vehicle speed of the subject vehicle VI is suppressed, and shorten the time required for parking, even when the passage width W1 is narrow.

In addition, in the parking assist apparatus 1 and the parking assist method according to the present embodiment, the steering speed of the subject vehicle VI is set to be relatively higher and/or the vehicle speed of the subject vehicle VI is set to be relatively lower, in the case of setting the length of the second section Z2 to be relatively shorter. This can suppress the static steering amount when the subject vehicle VI turns, shorten the time required for turning, and shorten the time required for parking, even when the passage width W1 is narrow. Further, this can suppress the amount of turning required after reaching the position of turning the steering wheel, shorten the time during which the vehicle speed of the subject vehicle VI is suppressed, and shorten the time required for parking, even when the passage width W1 is narrow.

In addition, in the parking assist apparatus 1 and the parking assist method according to the present embodiment, the steering speed of the subject vehicle VI is set to be relatively higher and/or the vehicle speed of the subject vehicle VI is set to be relatively lower, when the width W1 of the passage in which the subject vehicle VI can travel to move from the current position to the parking space PS via the position of turning the steering wheel P is less than a predetermined value. This can suppress the static steering amount when the subject vehicle VI turns, shorten the time required for turning, and shorten the time required for parking, even when the passage width W1 is narrow. Further, this can suppress the amount of turning required after reaching the position of turning the steering wheel, shorten the time during which the vehicle speed of the subject vehicle V1 is suppressed, and shorten the time required for parking, even when the passage width W1 is narrow.

In addition, in the parking assist apparatus 1 and the parking assist method according to the present embodiment, the narrower the width W1 of the passage in which the subject vehicle VI can travel to move from the current position to the parking space PS via the position of turning the steering wheel P, the higher the set steering speed of the subject vehicle VI and/or the relatively lower the set vehicle speed of the subject vehicle VI. This can suppress the static steering amount when the subject vehicle VI turns, shorten the time required for turning, and shorten the time required for parking, even when the passage width W1 is narrow. Further, this can suppress the amount of turning required after reaching the position of turning the steering wheel, shorten the time during which the vehicle speed of the subject vehicle VI is suppressed, and shorten the time required for parking, even when the passage width W1 is narrow.

In addition, in the parking assist apparatus 1 and the parking assist method according to the present embodiment, the length of the second section Z2 is set using, at least, the passage width W1, the minimum turning radius of the subject vehicle VI, the steering speed of the subject vehicle VI, and the vehicle speed of the subject vehicle VI. This can shorten the time required for turning and can shorten the time required for parking, and therefore the length of the second section Z2 can be appropriately calculated.

### [Description of Reference Numerals]

- 1000: Parking assist system
1 Parking assist device
11 Control device
111 ROM
112 CPU
113 RAM
12 Output device
121 Display
2 Imaging device
2a Imaging device arranged on front grill part of vehicle
2b Imaging device arranged beneath left door mirror of vehicle
2c Imaging device arranged beneath right door mirror of vehicle
2d Imaging device arranged near rear bumper of vehicle
3 Image processing device
4 Ranging device
4a Front ranging device
4b Side ranging device
4c Rear ranging device
5 Vehicle controller
6 Driving system
7 Vehicle speed sensor
8 Steering angle sensor
V1 Subject vehicle
V2, V2a, V2b, V2c, V2d, V2e, V2f, V2g, V2h Another vehicle
VP Virtual viewpoint
IM1 Bird's-eye image
IM2 Monitoring image
PS, PS1, PS2, PS3 Parking space
L1, L2, L3, L4, L5, L6, L7, L8, L9, L10 Line
P, P, Pa, Pb, Pc Position of turning steering wheel
W Passage width
W1, W2 Width of passage in which subject vehicle can travel
Z1, Z1a, Z1b, Z1c First section
Z2, Z2a, Z2b Second section
Z3 Third section
T1, T4 Section corresponding to first section
T2, T5 Section corresponding to second section
T3, T6 Section corresponding to third section
Z-A Section for causing subject vehicle to move from current position to position of turning steering wheel P at constant steering angle
Z-B Section for causing subject vehicle VI to move from position of turning steering wheel P to parking space PS
T-A Section corresponding to section Z-A
T-B Section corresponding to subject vehicle's static steering at position of turning steering wheel P
T-C Section corresponding to section Z-B

## Claims

1. A parking assist method comprising:
detecting a parking space for parking a subject vehicle;
setting a position of turning a steering wheel, the steering wheel being turned at the position of turning the steering wheel;
generating a parking route for reaching from a current position of the subject vehicle to the parking space via the position of turning the steering wheel; and
controlling the subject vehicle so as to autonomously travel along the parking route,
wherein the parking assist method further comprises:
determining a turning direction to which the subject vehicle turns in a route for traveling from the position of turning the steering wheel to the parking space; and
generating a route from the current position of the subject vehicle to the position of turning the steering wheel such that a steering direction of the subject vehicle corresponds to the turning direction at a time when the subject vehicle is stopped at the position of turning the steering wheel.

2. The parking assist method according to claim 1, wherein
a steering angle of the subject vehicle at the time when the subject vehicle is stopped at the position of turning the steering wheel is equal to a steering angle when the subject vehicle starts traveling toward the parking space from the position of turning the steering wheel.

3. The parking assist method according to claim 1 or 2, comprising
setting steering speed of the subject vehicle to be relatively higher and/or setting vehicle speed of the subject vehicle to be relatively lower, when a width of a passage enabling the subject vehicle to travel for moving from the current position of the subject vehicle to the parking space via the position of turning the steering wheel is narrow, compared to a case where the width of the passage enabling the subject vehicle to travel for moving from the current position of the subject vehicle to the parking space via the position of turning the steering wheel is wide.

4. The parking assist method according to any one of claims 1 to 3, wherein
the parking route includes at least:
a first section that is a section from the current position of the subject vehicle to a position before the position of turning the steering wheel where the subject vehicle moves at a constant steering angle;
a second section that is a section following the first section and preceding the position of turning the steering wheel where the position of turning the steering wheel is included; and
a third section that is a section following the second section where the subject vehicle is turned toward a direction of moving to the parking space.

5. The parking assist method according to claim 4, comprising
setting a length of the second section to be relatively shorter, when a width of a passage enabling the subject vehicle to travel for moving from the current position of the subject vehicle to the parking space via the position of turning the steering wheel is narrow, compared to a case where the width of the passage enabling the subject vehicle to travel for moving from the current position of the subject vehicle to the parking space via the position of turning the steering wheel is wide.

6. The parking assist method according to claim 5, comprising
setting steering speed of the subject vehicle to be relatively higher and/or setting vehicle speed of the subject vehicle to be relatively lower when the length of the second section is set to be relatively shorter.

7. The parking assist method according to any one of claims 4 to 6, comprising
setting a length of the second section using, at least, a width of a passage enabling the subject vehicle to travel for moving from the current position of the subject vehicle to the parking space via the position of turning the steering wheel, a minimum turning radius of the subject vehicle, steering speed of the subject vehicle, and vehicle speed of the subject vehicle.

8. A parking assist apparatus comprising a control device configured to:
detect a parking space for parking a subject vehicle;
set a position of turning a steering wheel, the steering wheel being turned at the position of turning the steering wheel;
generate a parking route for reaching from a current position of the subject vehicle to the parking space via the position of turning the steering wheel; and
control the subject vehicle so as to autonomously travel along the parking route,
wherein the control device is further configured to:
determine a turning direction to which the subject vehicle turns in a route for traveling from the position of turning the steering wheel to the parking space; and
generate a route from the current position of the subject vehicle to the position of turning the steering wheel such that a steering direction of the subject vehicle corresponds to the turning direction at a time when the subject vehicle is stopped at the position of turning the steering wheel.
